# EUROPÄISCHE PATENTSCHRIFT

(11) **EP 1 005 500 B1**
(45) Veröffentlichungstag und Bekanntmachung des Hinweises auf die Patenterteilung: **17.12.2003**
(21) Anmeldenummer: 98943840.3
(22) Anmeldetag: 05.08.1998
(51) Int. Cl.: C08G 65/30

(54) **VERFAHREN ZUR HERSTELLUNG VON POLYETHERPOLYOLEN**
METHOD FOR PREPARING POLYETHER POLYOLS
PROCEDE POUR LA PREPARATION DE POLYOLS DE POLYETHER

(30) Priorität: 18.08.1997 DE 19735795
(43) Veröffentlichungstag der Anmeldung: 07.06.2000
(73) Patentinhaber: BAYER AG, 51368 Leverkusen (DE)
(72) Erfinder: BUYSCH, Hans-Josef, D-47809 Krefeld (DE); DIETRICH, Manfred, D-51373 Leverkusen (DE); GUPTA, Pramod, D-50181 Bedburg (DE); OOMS, Pieter, D-47800 Krefeld (DE)
(86) Internationale Anmeldenummer: EP9804860
(87) Internationale Veröffentlichungsnummer: WO99009087

(56) Entgegenhaltungen:
- EP-A- 0 038 983
- EP-A- 0 102 508
- EP-A- 0 383 333
- EP-A- 0 418 533
- EP-A- 0 641 814
- US-A- 4 122 035
- PATENT ABSTRACTS OF JAPAN vol. 005, no. 071 (C-054), 13. Mai 1981 & JP 56 022323 A (TAKEDA CHEM IND LTD), 2. März 1981

## Beschreibung

Vorliegende Erfindung betrifft ein Verfahren zur Herstellung von Polyetherpolyolen durch Umsetzung von Polyolen mit Epoxiden in Gegenwart von basischen Katalysatoren, indem man die Basen mit OH-funktionellen festen anorganischen Metall-Verbindungen aus den Polyethern entfernt, die basenbeladenen Verbindungen in die Umsetzung von Polyolen mit Epoxiden zurückführt oder die basenbeladenen Verbindungen mit Polyolen behandelt und diese Polyole in die Umsetzung mit Epoxiden einsetzt.

Aus US 3 528 920 ist bekannt, basische Katalysatoren, die bei der Herstellung von Polyetherpolyolen verwendet wurden, aus den Polyetherpolyen zu entfernen. Zur Entfernung der basischen Katalysatoren wurden die Polyetherpolyole mit Schwefelsäure neutralisiert, dann mit Magnesiumsilikat behandelt, getrocknet und anschließend bei erhöhter Temperatur zwecks Entfernung von Wasser destilliert. Das Magnesiumsilikat wurde dann in einem separaten Schritt von dem Polymerprodukt getrennt.

Aus US 4 029 879 ist ein verbessertes Verfahren zur Entfernung von basischen Katalysatoren aus Polyetherpolyolen bekannt, indem man die Polyetherpolyole mit Magnesiumsilikat in Gegenwart von 1 bis 5 Gew.-% Wasser behandelt. In einem separaten Schritt muß dann das Adsorbens durch Filtration von dem Polyetherpolyol und das Wasser durch Destillation abgetrennt werden.

Nachteilig bei den obengenannten Verfahren sind die Vielzahl der Reinigungsschritte, die Verwendung von Säuren zur Neutralisation sowie der Anfall von nicht verwertbarem ökonomisch und ökologisch belasteten Abfall von verunreinigtem Magnesiumsilikat. Durch die mit den geschilderten Nachteilen verbundenen bekannten Verfahren zur Entfernung von Katalysatoren aus Polyetherpolyolen werden die bisherigen Verfahren wenig wirtschaftlich.

Aufgabe der vorliegenden Erfindung ist es nun ein ökonomisch und ökologisch günstiges Verfahren zur Entfernung von basischen Katalysatoren aus Polyetherpolyolen zur Verfügung zu stellen, das die Nachteile der bekannten Verfahren vermeidet.

Gegenstand der vorliegenden Erfindung ist ein Verfahren zur Herstellung von Polyetherpolyolen durch Umsetzung von Polyolen mit Epoxiden in Gegenwart von basischen Katalysatoren, das dadurch gekennzeichnet ist, daß man die die basischen Katalysatoren enthaltenden Polyetherpolyole mit OH-funktionellen, in den Polyetherpolyolen unlöslichen festen Verbindungen von Metallen der III. bis VIII. Gruppe des Periodensystems der Elemente (Mendelejev) mit BET-Oberflächen von 10 bis 1000 m²/g behandelt, die mit den basischen Katalysatoren beladenen festen anorganischen Verbindungen aus dem Polyetherpolyol isoliert und in die Umsetzung der Polyole mit Epoxiden einsetzt oder die isolierten, mit den basischen Katalysatoren beladenen anorganischen Verbindungen mit den in die Umsetzung mit Epoxiden einzusetzenden Polyolen in Berührung bringt, diese Polyole von den anorganischen Verbindungen abtrennt und der Umsetzung mit den Epoxiden zuführt.

Die Herstellung von Polyetherpolyolen ist seit langem bekannt und beispielsweise in allgemeiner Form beschrieben in dem Kunststoffhandbuch, Band 7, Polyurethane, Carl Hanser Verlag, München-Wien, 1973, S. 58 ff. Als Starterverbindungen für die Epoxidpolymerisation kommen alle bekannten Polyole in Betracht. Genannt seien insbesondere Mono-, Di-, Tri- und Tetraethylenglykol, Mono-, Di-, Tri- und Tetrapolypropylenglykol, 1,2-, 1,3-, 1,4-Butandiol, Glycerin, Trimethylolpropan, Trimethylolethan, Pentaerythrit, Hexantriol, Zucker, wie Saccharose, Fructose, Maltose, Sucrose, Xylose, Sorbit, Palatinit, Xylit, Oxyalkylierungsprodukte von Ammoniak und Aminen, wie Ethylendiamin, Diethylentriamin, Piperazin, Anilin, Toluylendiamin, Methylendianilin, Phenole wie Hydrochinon, Resorcin, Brenzcatechine, Bisphenol F, Bisphenol A und deren Oxyalkylierungsprodukte, ferner sog. Vorpolymerisate, die man dadurch erhält, daß man die obengenannten Polyole mit 0,5 bis 4, bevorzugt 0,7 bis 2 Mol Epoxid/Mol Polyol umsetzt.

Bevorzugt werden eingesetzt Mono- bis Tetraethylenglykol, Mono- bis Tetrapropylenglykol, Glycerin, Trimethylolpropan, Pentaerythrit und die o.a. Zucker und deren Hydrierungsprodukte.

Geeignete Epoxide sind Ethylenoxid, Propylenoxid, Butylenoxid, Cyclohexenoxid, Styroloxid und Mischungen dieser Epoxide. Bevorzugt sind Ethylenoxid und Propylenoxid.

Als basische Katalysatoren werden insbesondere Kaliumhydroxid und Natriumhydroxid eingesetzt.

Wie oben erwähnt, verbleiben die basischen Katalysatoren bei der Herstellung der Polyetherpolyole in den Polyetherpolyolen und müssen daraus entfernt werden.

Nach dem erfindungsgemäßen Verfahren gelingt es nun, die basischen Katalysatoren zu entfernen, indem man die die basischen Katalysatoren enthaltenen Polyetherpolyole mit OH-funktionellen, in den Polyetherpolyolen unlöslichen festen Hydroxiden und/oder Hydroxyoxiden von Aluminium, Gallium, Silicium, Zinn, Titan, Zirkonium, Hafnium, Tantal, Niob und Eisen, bevorzugt Hydroxiden und/oder Hydroxyoxiden von Aluminum, Silicium, Zinn, Titan, Zirkonium, Tantal und Niob, insbesondere von Aluminium, Silicium, Titan, Tantal und Niob behandelt. Selbstverständlich können die Hydroxide und Hydroxyoxide der genannten Metalle auch als chemische Verbindungen oder in Mischungen miteinander eingesetzt werden. Genannt seien z.B. Aluminium-Silicium-Hydroxyoxide und Titan-Zirkonium-Hydroxyoxide.

Es besteht auch die Möglichkeit, die genannten Hydroxide und Hydroxyoxide mit anderen Metallverbindungen, wie Magnesiumsilikaten oder Aluminiumtitanaten, abzumischen, sowie mit Schichtsilikaten vom Typ der Montmorillonite, Bentonite und (Hydro) Talcite. Die Menge an solchen zugemischten Metallverbindungen beträgt dabei je nach Arbeitsweise bis zu 500 Gew.-Teile, bevorzugt 200 Gew.-Teile, bezogen auf ein Gew.-Teil an basischem Katalysator.

Ganz besonders bevorzugt werden die Hydroxyoxide der obengenannten Metalle eingesetzt.

Die Menge an einzusetzenden o.g. festen anorganischen Verbindungen beträgt bis zu 1000, bevorzugt bis zu 400 Gew.-Tle, bezogen auf 1 Gew.-Tl an basischem Katalysator.

Die bei dem erfindungsgemäßen Verfahren zur Entfernung der basischen Katalysatoren verwendeten Adsorbentien der oben beschriebenen Art sind beispielsweise beschrieben in Ullmanns's Encylopedia of Industrial Chemistry 5. Ed. Vol A1, 557ff; A27, 74ff; A20, 190-271 und 297-311, A24, 12ff; A26, 78ff; A17, 255ff; A23, 583-791.

Die eingesetzten Adsorbentien besitzen eine BET-Oberfläche von 10 bis 1000 m²/g, bevorzugt von 20 bis 900 m²/g, besonders bevorzugt von 25 bis 800 m²/g. Sie können als Pulver oder in Form von Gries, Granulaten, Kugeln, Zylinder, Hohlzylinder oder Ringen eingesetzt werden. Die OH-funktionellen Oberflächen der genannten Hydroxide und Hydroxyoxide erhält man insbesondere durch geeignete Calziniermethoden von gefällten Hydroxyoxiden der genannten Metalle oder deren gelförmigen Hydraten bei relativ niedrigen Temperaturen. Die Herstellung solcher oberflächenreichen Hydroxide und Hydroxyoxide der obengenannten Metalle ist bekannt und beispielsweise beschrieben in Kirk Othmer, Encyclopedia of chemical technology, 3. Aufl., Bd. 2, S. 218 ff (1978); Ullmann's Encyclopedia of industrial chemistry unter den o.a. Metallnamen.

Als basische Katalysatoren werden bei der Herstellung von Polyetherpolyolen neben dem oben erwähnten Kalium und Natriumhydroxid auch die Hydroxide der anderen Alkali- und die der Erdalkali-Metalle eingesetzt, wenn auch in untergeordnetem Maße. Darüber hinaus können tertiäre Amine als basische Katalysatoren verwendet, wie Triethylamin, Tributylamin, Tetramethylethylendiamin, Pentamethylendiethylentriamin, Diethylpiperazin, Methyl-diaza-bicycloundecen, Methyl-diaza-bicyclononen und Pentamethylguanidin.

Die Durchführung des erfindungsgemäßen Verfahrens beinhaltet grundsätzlich folgende Operationen:
- Umsetzung der Polyole mit Epoxiden in Gegenwart von basischen Katalysatoren zu Polyetherpolyolen,
- Behandlung der Polyetherpolyole mit den OH-funktionellen festen unlöslichen anorganischen Metallverbindungen,
- Abtrennung der Polyetherpolyole von den die basischen Katalysatoren enthaltenden festen Metallverbindungen,
- Behandlung der aus den Polyetherpolyolen isolierten, die basischen Katalysatoren enthalten Metallverbindungen mit den für die Umsetzung mit Epoxiden vorgesehenen Polyolen,
- Umsetzung mit den Epoxiden.

Diese grundsätzlichen Operationen lassen sich auf verschiedene Arten technisch realisieren und zwar sowohl in diskontinuierlicher, halbkontinuierlicher und vollkontinuierlicher Verfahrensweise.

Alle Operationen und Verfahrensweisen werden bevorzugt bei Temperaturen von 80 bis 190°C, besonders bevorzugt 100 bis 180°C, und bei 0,5 bis 20, bevorzugt 0,8 bis 15 bar durchgeführt, wobei es durchaus möglich ist, die einzelnen Operationen innerhalb einer Verfahrensweise bei verschiedenen Temperaturen und Drücken vorzunehmen.

Die Menge an Polyolen zur Behandlung der die basischen Katalysatoren enthaltenden Metallverbindungen kann leicht durch entsprechende Versuche ermittelt werden und kann je nach Verfahrensweise und Katalysatorgehalt der Metallverbindung das 1- bis 200-fache, bevorzugt das 3- bis 150-fache, insbesondere das 5- bis 100-fache der Menge an Katalysator betragen, mit der die Metallverbindung beladen ist.

Diskontinuierliches Arbeiten kann in einer besonderen Form beispielsweise so gestaltet werden, daß man in einem Reaktor die Umsetzung von Polyol mit Epoxiden in Gegenwart eines basischen Katalysators in bekannter Weise durchführt, nach der Umsetzung überschüssiges Epoxid austreibt, eine geeignete Menge einer erfindungsgemäß zu verwendenden Metallverbindung zusetzt und damit das Polyetherpolyol behandelt, anschließend die mit Katalysator beladene Metallverbindung durch Filtrieren, Zentrifugieren oder eine andere Trennoperation vom Polyetherpolyol abtrennt und diesen Filter- oder Zentrifugierrückstand in den Reaktor gibt und damit die nächste Umsetzung von Polyol mit Epoxid katalysiert. Man kann auch den Katalysator enthaltenden Rückstand mit der geeigneten Menge des für den nächsten Ansatz zu verwendenden Polyols behandeln, damit den Katalysator ablösen, die Metallverbindung abtrennen und das nunmehr Katalysator enthaltende Polyol in die Umsetzung mit Epoxid einsetzen.

Bei einer halbkontinuierlichen Arbeitsweise kann in einer speziellen Ausführungsform beispielsweise so vorgegangen werden:

Aus einem Vorratsbehälter wird Polyol oder ein Vorpolymerisat (hergestellt aus dem Polyol durch Addition von nur wenigen Mol Epoxid pro Mol Polyol) (PL) in mindestens ein Gefäß I eingeleitet, das ein mit Katalysator weitgehend gesättigtes und noch Polyetherpolyol (PE) enthaltendes Bett der Metallverbindung enthält. PL dringt in das Bett ein, schiebt das noch vorhandene PE aus dem Bett heraus und löst den Katalysator von der Metallverbindung ab. Nachdem PE das Bett in Richtung eines Sammelbehälters verlassen hat, wird der PL-Strom in eine Reaktionszone geleitet und mit der gewünschten Menge Epoxid umgesetzt. Reste nicht umgesetzten Epoxids werden ausgeblasen und das erhaltene PE in mindestens ein Gefäß II geleitet, das analog I ein Bett der Metallverbindung enthält, die aber frei bzw. weitgehend frei von Katalysator ist. Beim Durchgang durch II wird das PE von Katalysator befreit und gesammelt. Dieser gesamte Vorgang kann sooft wiederholt werden, bis I an Katalysator verarmt und II mit Katalysator weitgehend gesättigt ist. Nun wird die Fließrichtung umgekehrt, PL durch II geleitet, die Umsetzung in der Reaktionszone durchgeführt und der Katalysator in I festgehalten. Das dabei zunächst in I noch vorhandene PL wird vom eintretenden PE aus dem Bett herausgedrängt und für weitere Umsetzungen bereitgehalten.

Eine weitere besondere Ausführungsform des erfindungsgemäßen Verfahrens ist eine vollkontinuierliche und kann beispielsweise so gestaltet werden, daß in dem o.a. halbkontinuierlichen Prozeß nun auch die Reaktionszone für eine kontinuierliche Arbeit eingerichtet und entsprechend genutzt wird:

Aus einem Vorratsbehälter wird demnach PL durch mindestens ein Bett der Metallverbindungen (I), das weitgehend mit Katalysator gesättigt ist kontinuierlich hindurch geleitet, in der Reaktionszone kontinuierlich mit Epoxid umgesetzt und dann PE kontinuierlich in mindestens einem zweiten Bett (II) mit Metallverbindung von Katalysator befreit. Wenn Bett I an Katalysator verarmt und Bett II weitgehend gesättigt ist, wird die Fließrichtung umgekehrt und PL durch II geleitet, in der Reaktionszone wieder mit Epoxid umgesetzt und in I vom Katalysator getrennt.

Natürlich ist es möglich, bei den verschiedenen Verfahrensweisen die Umsetzung mit Epoxiden partiell auch schon in den Betten mit der Metallverbindung ablaufen zu lassen.

Die Reaktionszone kann aus unterschiedlichen Apparaten konstruiert sein und beispielsweise aus einer Rührkesselkaskade, Kammerreaktoren, Reaktionsröhren mit Pfropfströmung und Mischelementen, aus Reaktionsdestillationen, die auch die zur Reaktion parallele Entfernung von Allylalkohol und überschüssigem Epoxid erlauben und weiteren für kontinuierliche Flüssig-Gas-Reaktionen geeignete Reaktoren bestehen, wie sie beispielsweise in Ullmann' Encyclopedia of Industrial Chemistry 5. Ed. Vol B4, 87ff, 99ff, 106-328, 561ff und Vol B3, 7-5 bis 7-10 und Perry's Chemical Engineers Handbook 6. Ed., 4-24 bis 4-52, näher beschrieben sind.

Die Gefäße für die Adsorbensbetten können je nach Art und Formierung des Adsorbens und des damit verbundenen Fließwiderstandes schlanke Säulen mit tiefem Adsorbensbett oder auch breite trommelförmige Behälter mit flachem, leicht durchströmbarem Bett darstellen. Zur Vermeidung von Rückvermischungen sollten beispielsweise Ein- und Austrittsbereiche konisch gestaltet und mit Füllkörpern ausgefüllt sein.

Die vorausgehenden Erläuterungen von besonderen Ausführungsformen des erfindungsgemäßen Verfahrens zeigen, daß die basischen Katalysatoren
- über lange Zeit erhalten bleiben und nicht durch Neutralisation zerstört werden,
- auf sehr einfache Weise aus dem Polyetherpolyol entfernt werden, ohne daß zusätzliche Mittel und Energien aufzuwenden sind und
- außerhalb der eigentlichen Produktionseinheit nicht mehr in Erscheinung treten und gehandhabt werden müssen.

### Beispiele

### Beispiel 1

440 g einer Lösung eines Polyethers, hergestellt aus 3 % Trimethylolpropan (Gew.-%), 80 % Propylenoxid und 17 % Ethylenoxid mit einem Molekulargewicht von 4 800 und einer OH-Zahl von 35 enthaltend 0,25 % Kalium in Toluol (1/1), wurden mit 32 g eines Aluminiumoxidhydrates (Camag 5016/A) 1 h bei 85°C gerührt. Nach Absaugen, Waschen mit Toluol und Trocknen enthielt das Aluminiumoxidhydrat 1,3 % Kalium und der Polyether 61 ppm Kalium.

Bei der Behandlung des isolierten Aluminiumoxides mit der 3,8-fachen Menge an Glycerin bei 85°C während 1 h sank sein Kaliumgehalt um 74 % ab und das Glycerin enthielt dann 0,14 % Kalium.

Dieses Beispiel zeigt im ersten Teil, daß aus einem katalysatorhaltigen Polyetherpolyol mit einem Aluminiumoxid KOH praktisch quantitativ entfernt wird und im zweiten Teil, daß von diesem Aluminiumoxid ¾ der adsorbierten KOH-Menge durch einfache Behandlung mit dem Polyol Glycerin wieder desorbiert wird.

### Beispiel 2

Wiederholte man Beispiel 1 ohne Toluol mit 220 g Polyether und 32 g Aluminiumoxid, so verblieben 103 ppm Kalium im Polyether.

### Beispiel 3

Wiederholte man Beispiel 1 mit einem Siliciumdioxid (Grace 432), so wurde im Polyether kein Kalium (< 1 ppm) gefunden. Bei der Wiederholung von Beispiel 2 mit obigem Siliciumdioxid fand man 10 ppm Kalium im Polyether.

Dieses Beispiel zeigt, daß die verschiedenen Metallverbindungen unter vergleichbaren Bedingungen eine unterschiedliche Wirkung haben.

### Beispiel 4

50 g Vorpolymerisat aus ca. 70 Gew.-% Trimethylolpropan und 30 Gew.-% Propylenoxid (das von KOH befreit war) wurde mit 5 g Al₂O₃, das aus einer Polyetherpolyol-Reinigung stammte und 1,2 Gew.-% Kalium enthielt, über 12 h in einem 250 ml Dreihalskolben unter intensivem Rühren bei 250 U/min, 100 bis 120°C und Normaldruck mit Propylenoxid begast. Die Massezunahme durch Polymerisation von Propylenoxid betrug 17 Gew.-%.

### Beispiel 5

Wurde Beispiel 4 wiederholt mit einem Al₂O₃ aus einer PE-Reinigung, das 2,3 Gew.-% Kalium enthielt, so erhielt man einen Massenzuwachs von 196 Gew.-% durch Polymerisation von Propylenoxid.

### Vergleichsbeispiele 6 und 7

Wurde Beispiel 4 ohne Zusatz oder mit reinem Al₂O₃ wiederholt, so wurde keine Polymerisation von Propylenoxid beobachtet.

Beispiele 4 und 5 belegen, daß die mit KOH-beladenen Metallverbindungen als solche, ohne vorherige separate Behandlung mit Polyol die Umsetzung von Polyolen mit Epoxiden katalysieren. Nach den Vergleichsbeispielen 6 und 7 findet ohne Zusatz und mit reinem Aluminiumoxid keine Umsetzung statt.

## Patentansprüche

1. Verfahren zur Herstellung von Polyetherpolyolen durch Umsetzung von Polyolen mit Epoxiden in Gegenwart von basischen Katalysatoren, **dadurch gekennzeichnet, daß** man die die basischen Katalysatoren enthaltenden Polyetherpolyole mit OH-funktionellen, in den Polyetherpolyolen unlöslichen festen Hydroxiden und/oder Hydroxyoxiden von Aluminium, Gallium, Silicium, Zinn, Titan, Zirkonium, Hafnium, Tantal, Niob und Eisen mit BET-Oberflächen von 10 bis 1000 m²/g behandelt, die mit den basischen Katalysatoren beladenen festen Hydroxide und/oder Hydroxyoxide aus dem Polyetherpolyol isoliert und in die Umsetzung von Polyolen mit Epoxiden einsetzt oder die isolierten, mit den basischen Katalysatoren beladenen Hydroxide und/oder Hydroxyoxide mit den in die Umsetzung mit Epoxiden einzusetzenden Polyolen in Berührung bringt, diese Polyole von den Hydroxiden und/oder Hydroxyoxiden abtrennt und der Umsetzung mit Epoxiden zuführt.

2. Verfahren nach Anspruch 1, **dadurch gekennzeichnet, daß** man die festen Hydroxide und/oder Hydroxyoxide in Mengen von bis zu 1000 Gew.-Tle, bezogen auf 1 Gew.-Tl an basischem Katalysator, einsetzt.

## Claims

1. Process for the preparation of polyether polyols by reacting polyols with epoxides in the presence of basic catalysts, **characterised in that** the polyether polyols containing the basic catalysts are treated with OH-functional solid hydroxides and/or hydroxy oxides of aluminium, gallium, silicon, tin, titanium, zirconium, hafnium, tantalum, niobium and iron, the said hydroxides and/or hydroxy oxides being insoluble in the polyether polyols and having BET surface areas of from 10 to 1000 m²/g, the solid hydroxides and/or hydroxy oxides laden with the basic catalysts are isolated from the polyether polyol and used in the reaction of polyols with epoxides, or the isolated hydroxides and/or hydroxy oxides laden with the basic catalysts are brought into contact with the polyols that are to be used in the reaction with epoxides, those polyols are separated from the hydroxides and/or hydroxy oxides and delivered to the reaction with epoxides.

2. Process according to claim 1, **characterised in that** the solid hydroxides and/or hydroxy oxides are used in amounts of up to 1000 parts by weight, based on 1 part by weight of basic catalyst.

## Revendications

1. Procédé de préparation de polyétherpolyols par réaction de polyols avec des époxydes en présence de catalyseurs basiques, **caractérisé en ce que** les polyétherplyols contenant les catalyseurs basiques sont traités avec des hydroxydes et/ou hydroxyoxydes d'aluminium, de gallium, de silicium, d'étain, de titane, de zirconium, d'hafnium, de tantale, de niobium et de fer sus forme solide, à fonction OH et insolubles dans les polyétherpolyols avec des surfaces BET de 10 à 1000 m²/g, que les hydroxydes et/ou hydroxyoxydes solides chargés des catalyseurs basiques sont isolés du polyétherpolyol et utilisés dans la réaction des polyols avec des époxydes ou les hydroxydes et/ou hydroxyoxydes isolés, chargés avec les catalyseurs basiques, sont mis en contact avec les polyols à utiliser dans la réaction avec les époxydes et ces polyols sont séparés des hydroxydes et/ou hydroxyoxydes et amenés à la réagir avec les époxydes.

2. Procédé selon la revendication 1, **caractérisé en ce que** les hydroxydes et/ou hydroxyoxydes solides sont utilisés dans des quantités pouvant atteindre 1000 parts en poids pour 1 part en poids de catalyseur basique.
